# EUROPEAN PATENT APPLICATION

(11) **EP 3 431 806 A1**
(43) Date of publication of application: **23.01.2019**
(21) Application number: 17766460.4
(22) Date of filing: 07.03.2017
(51) Int. Cl.: F16F 1/18, B60G 11/04, F16F 1/20, F16F 1/26

(54) **GAP RETAINING MEMBER AND LAMINATED LEAF SPRING PROVIDED WITH SAME**

(30) Priority: 15.03.2016 JP 2016051299
(71) Applicant: NHK Spring Co., Ltd., Kanagawa 236-0004 (JP)
(72) Inventor: CHIHARA, Hidenori, Yokohama-shi Kanagawa 236-0004 (JP); TSUCHIDA, Manabu, Yokohama-shi Kanagawa 236-0004 (JP)
(74) Representative: Lahrtz, Fritz
(86) International application number: PCT/JP2017/009032
(87) International publication number: WO 2017/159459

(57) **Abstract**

This gap retaining member (4a) is provided between leaf springs (1) and has a surface (4a1) which follows a central curved outer surface (1b1) of an adjacent leaf spring (1b).

## Description

### TECHNICAL FIELD

The present disclosure relates to gap retaining members used for suspension apparatuses in vehicles and laminated leaf springs provided with the same.

### BACKGROUND ART

Some conventional leaf springs of suspension apparatuses in vehicles or the like have a shape having a flat portion at the center and curvatures in the other portions, but those springs have, for example, a problem that the shape is difficult to produce. On the other hand, leaf springs having a U shape as a whole, in other words, having a curvature also at the center portion have a problem as described in the following Patent Literature 1.

Specifically, according to Patent Literature 1, because the center portions of leaf springs have a U shape, tensile stress occurs in the upper surface of each leaf spring and compressive stress occurs in the lower surface when the leaf springs are fastened with a U bolt.

Patent Literature 2 discloses that the riding comfort of a vehicle can be improved by changing the shapes of space members provided between leaf springs for the vehicle.

### CITATION LIST

### Patent Literature

Patent Literature 1 : Japanese Utility Model Registration Application Publication No. Hei 02-71138 (the 16th line on page 2 to the first line on page 3, and other parts)
Patent Literature 2 : Japanese Patent Application Publication No. 2010-076481 (paragraph 0010)

### SUMMARY OF INVENTION

### Technical Problem

Spacers provided between leaf springs of a conventional suspension apparatus have thin flat plate shapes. Similarly, washers also have flat plate shapes.

The leaf springs are formed into a shape having such a curvature as to curve projecting downward.

Conventional spacers have flat plate shapes. It means that the upper surfaces and the lower surfaces of the spacers have flat surfaces.

Similarly, conventional washers have flat plate shapes. It means that the upper surfaces and the lower surfaces of the washers also have flat surfaces.

Thus, when the leaf springs are sandwiched between the flat plate-shaped washers and the flat plate-shaped spacers and fastened and fixed with a center bolt and a U bolt, the center portions of the leaf springs having curved shapes are deformed into flat surface shapes.

Due to the deformation of the center portions of the leaf springs, high stress is distributed at the center portions of the leaf springs in the assembled state, making it likely to cause breakage due to stress corrosion cracking or other factors.

In addition, as described above, the leaf springs have bolt insertion holes at center portions. For this reason, when high stress occurs around the center portions of the leaf springs in the assembled state, the leaf springs are likely to break at the center portions due to the occurrence of stress concentration.

The present invention has been devised in view of the above situations, and an objective of the present invention is to provide a gap retaining member that reduces high stress generated at the center portions of leaf springs and allows the leaf springs to have longer lives, and laminated leaf springs including the gap retaining member.

### Solution to Problem

To solve the above problems, a gap retaining member according to a first aspect of the present invention is provided between leaf springs and has a curved surface along a center portion of an outer surface of an adjacent leaf spring of the leaf springs.

The first aspect of the present invention reduces deformation of the leaf springs when they are fixed, reducing stress generated in the leaf springs.

A gap retaining member according to a second aspect of the present invention is the gap retaining member according to the first aspect of the present invention, in which the gap retaining member is adjacent to a lower surface of the leaf spring, and an upper surface of the gap retaining member has a surface along the lower surface of the leaf spring.

In the second aspect of the present invention, the upper surface of the gap retaining member has the surface along the lower surface of the leaf spring, and this reduces the deformation of the leaf springs when they are fixed, reducing stress generated in the leaf springs.

A gap retaining member according to a third aspect of the present invention is the gap retaining member according to the first aspect of the present invention, in which the gap retaining member is adjacent to an upper surface of the leaf spring, and a lower surface of the gap retaining member has a surface along the upper surface of the leaf spring.

In the third aspect of the present invention, the lower surface of the gap retaining member has the surface along the upper surface of the leaf spring, and this reduces the deformation of the leaf springs when they are fixed, reducing stress generated in the leaf springs.

A gap retaining member according to a fourth aspect of the present invention is the gap retaining member according to the first aspect of the present invention, in which the gap retaining member includes a first gap retaining member and a second gap retaining member, the first gap retaining member is adjacent to a lower surface of the leaf spring, an upper surface of the first gap retaining member has a surface along the lower surface of the leaf spring, the second gap retaining member is adjacent to an upper surface of the leaf spring, and a lower surface of the second gap retaining member has a surface along the upper surface of the leaf spring.

Since in the fourth aspect of the present invention, the first gap retaining member of the gap retaining member is adjacent to the lower surface of the leaf spring, and the upper surface of the first gap retaining member has the surface along the lower surface of the leaf spring, and the second gap retaining member is adjacent to the upper surface of the leaf spring, and the lower surface of the second gap retaining member has the surface along the upper surface of the leaf spring, this reduces the deformation of the leaf springs when they are fixed, reducing stress generated in the leaf springs.

A gap retaining member according to a fifth aspect of the present invention is the gap retaining member according to the first aspect of the present invention, in which the gap retaining member is adjacent to an upper surface of a first leaf spring of the leaf springs, a lower surface of the gap retaining member has a surface along the upper surface of the first leaf spring, the gap retaining member is adjacent to the lower surface of a second leaf spring of the leaf springs, and an upper surface of the gap retaining member has a surface along the lower surface of the second leaf spring.

The fifth aspect of the present invention reduces deformation of the first leaf spring and the second leaf spring by both the upper and lower surfaces of the gap retaining member when the first leaf spring and the second leaf spring are fixed, reducing stress generated in the leaf springs.

A gap retaining member according to a sixth aspect of the present invention is provided between leaf springs and has a surface that has a portion with a curvature equal to a curvature of a center portion of an outer surface of an adjacent leaf spring of the leaf springs or a curvature larger than a flat surface and smaller than the outer surface, and that is opposed to the outer surface.

In the sixth aspect of the present invention, the gap retaining member has a surface that has a portion with a curvature equal to a curvature of an outer surface of an adjacent leaf spring of the leaf springs or a curvature larger than the curvature of a flat surface and smaller than the outer surface, and that is opposed to the outer surface. This reduces deformation of the leaf springs when they are fixed. This, in turn, reduces stress generated in the leaf springs.

A gap retaining member according to a seventh aspect of the present invention is provided between leaf springs and has a surface having a portion away from and opposed to an outer surface of an adjacent leaf spring of the leaf springs.

In the seventh aspect of the present invention, the gap retaining member has a surface having a portion away from and opposed to an outer surface of an adjacent leaf spring of the leaf springs. This reduces the deformation of the leaf springs when they are fixed, reducing stress generated in the leaf springs.

A gap retaining member according to an eighth aspect of the present invention is the gap retaining member according to any one of the first to seventh aspects of the present invention, in which the gap retaining member is a spacer or a washer.

The eighth aspect of the present invention provides a space or a washer having the effect of the gap retaining member according to one of the first to seventh aspects of the present invention.

Laminated leaf springs according to a ninth aspect of the present invention include leaf springs and a gap retaining member according to one of the first to eight aspects of the present invention, provided between the leaf springs.

The ninth aspect of the present invention provides the laminated leaf springs including the gap retaining member having the effect of one of the first to seventh aspects of the present invention.

### Advantageous Effects of Invention

The present invention provides a gap retaining member that reduces stress generated in leaf springs and allows the leaf springs to have longer lives, and laminated leaf springs including the gap retaining member.

### BRIEF DESCRIPTION OF DRAWINGS

Fig. 1 is a front view of a suspension apparatus according to embodiment 1 of the present invention.
Fig. 2 is an enlarged front view of the center and its vicinities of leaf springs in the suspension apparatus.
Fig. 3A is a perspective view of a spacer.
Fig. 3B is a view as seen in the direction of arrow I in Fig. 3A.
Fig. 4A is a diagram illustrating a verification method for stress reduction effect of a comparative example.
Fig. 4B is a diagram illustrating a verification method for stress reduction effect of working examples.
Fig. 5 is an enlarged front view of the center and its vicinities of leaf springs in a suspension apparatus of embodiment 2.
Fig. 6A is a perspective view of a first spacer as seen obliquely from below.
Fig. 6B is a view as seen in the direction of arrow II in Fig. 6A.
Fig. 7 is an enlarged schematic view of a leaf spring of embodiment 2 which is fastened and fixed.

### DESCRIPTION OF EMBODIMENTS

Hereinafter, embodiments of the present invention will be described in detail with reference to the drawings as appropriate.

### <<Embodiment 1>>

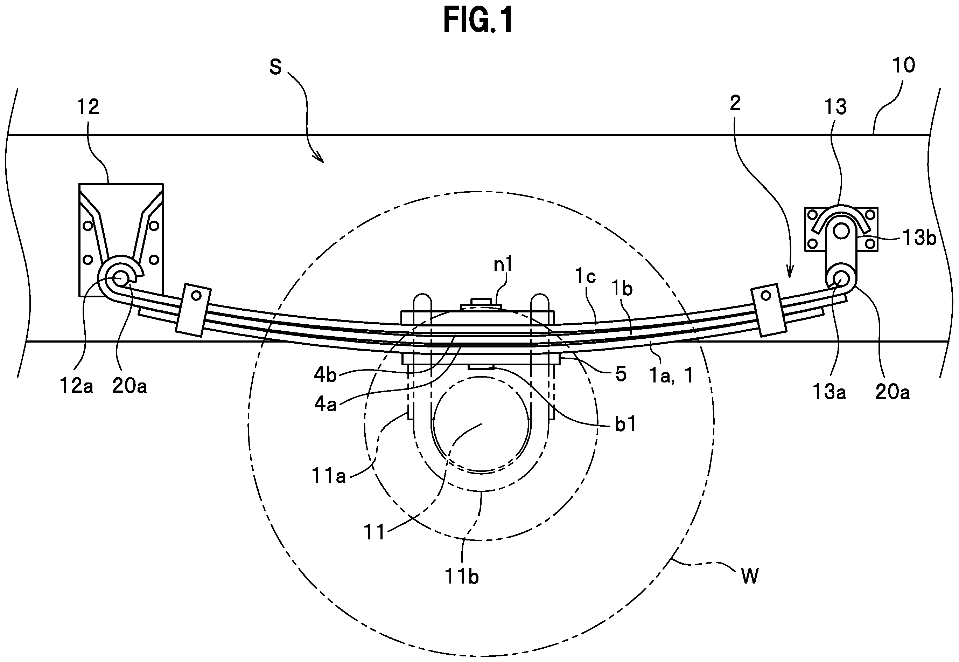

Fig. 1 is a front view of a suspension apparatus according to embodiment 1 of the present invention.

A suspension apparatus S of embodiment 1 is provided on the vehicle body of the vehicle and supports an axle shaft 11. The vehicle body means, for example, a chassis 10.

The suspension apparatus S includes leaf springs 1 (1a, 1b, 1c) and gap retaining members (spacers 4a, 4b and a washer 5).

The washer 5, which is an example of a gap retaining member, is provided below the leaf spring 1a. The spacer 4a, which is also an example of a gap retaining member, is provided between the leaf springs 1a and 1b. The spacer 4b is fixed between the leaf springs 1b and 1c.

The leaf springs 1 are curved projecting downward. In other words, the leaf springs 1 have the upper and lower surfaces having curvatures with which the upper and lower surfaces are curved projecting downward.

The suspension apparatus S has circular portions 20a, formed to be wound in a curled shape, at both ends of a spring apparatus 2. The suspension apparatus S is fixed to the chassis 10 via the circular portions 20a.

The chassis 10 includes a frame extending in the front-rear direction and has a front attachment portion 12 and a rear attachment portion 13 for attaching the suspension apparatus S.

One circular portion 20a of the suspension apparatus S is fitted and fixed to a front support shaft 12a of the front attachment portion 12. The other circular portion 20a is fitted and fixed to a rear support shaft 13a fixed to an arm portion 13b of the rear attachment portion 13.

The axle shaft 11 to which a wheel W is attached is rotatably supported by a housing 11a. The housing 11a is suspended by the suspension apparatus S with a pair of U bolts 11b.

The leaf springs 1, spacers 4, and washer 5 each have an insertion hole (not illustrated) formed at the center. The leaf springs 1, spacers 4, and washer 5 are fixed with a center bolt b1 inserted through the insertion holes of the leaf springs 1, spacers 4, and washer 5 and fastened with a nut n1.

The U bolt 11b binds and fixes the leaf springs 1, spacers 4, and washer 5 at both sides of the center bolt b1.

The center portion of the leaf springs 1 means an area including a portion between a pair of shaft portions of the U bolt 11b in the leaf-spring longitudinal direction.

However, the center portion of the leaf springs 1 may be an area including portions outside the U bolt 11b in the leaf-spring longitudinal direction.

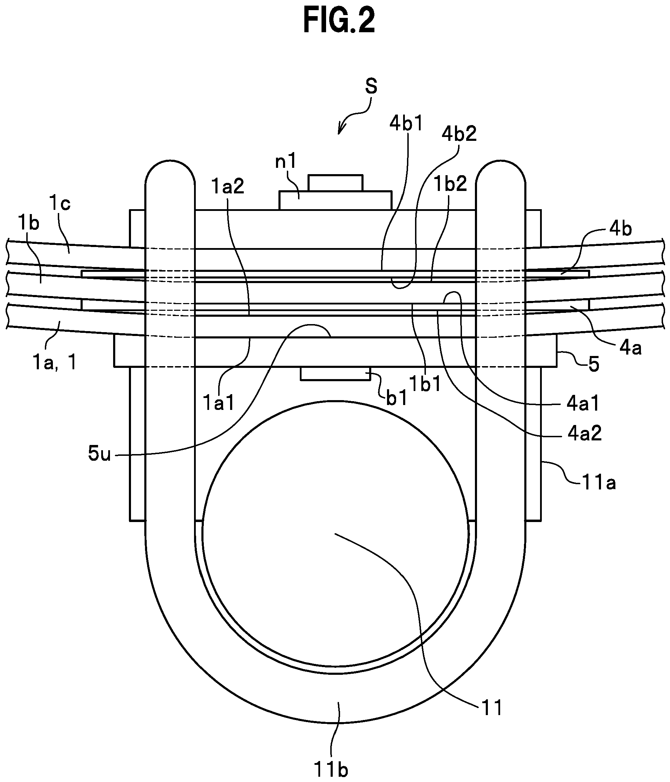

Fig. 2 is an enlarged front view of the center and its vicinities of the leaf springs of the suspension apparatus.

Below the leaf spring 1a arranged at the lowermost position is provided the washer 5. The washer 5 is a member for adjusting the height of the vehicle body (not illustrated) with respective to the suspension apparatus S.

Above the leaf spring 1a is arranged the first spacer 4a. Between the leaf springs 1b and 1c, which are the second and third leaf springs from the bottom, is arranged the second spacer 4b. The first and second spacers 4a and 4b prevent abrasion of the surface layers (such as plating layers or coating layers) caused by the leaf springs 1 sliding directly on each other.

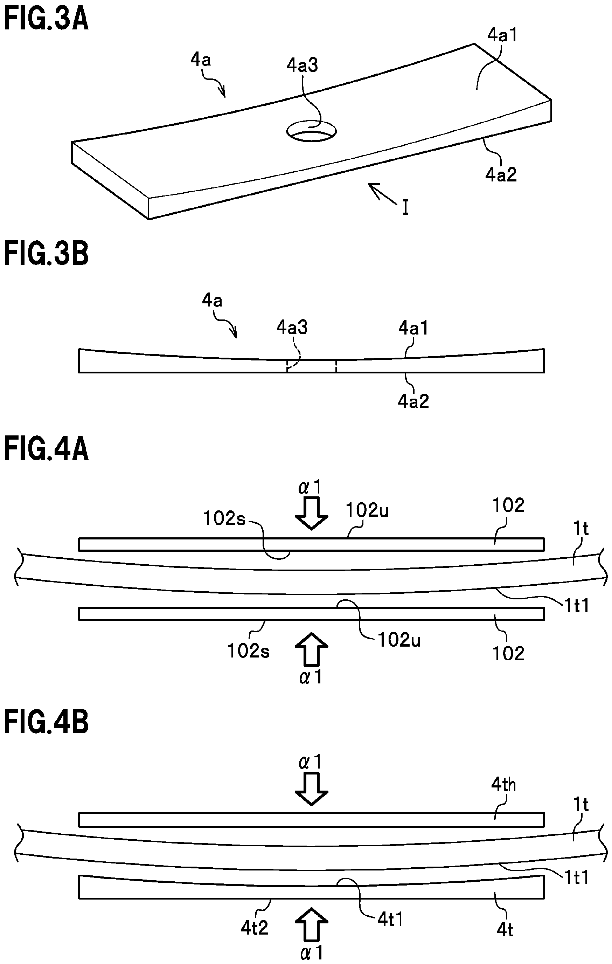

Fig. 3A is a perspective view of a spacer, and Fig. 3B is a view as seen in the direction of arrow I in Fig. 3A.

The first and second spacers 4a and 4b each have a flat, approximately plate-like shape which is elongated in the direction in which the leaf springs 1 extend. The first and second spacers 4a and 4b are made of, for example, a metal such as galvanized steel sheet (SGCC) or a resin such as POM (polyoxymethylene).

The first and second spacers 4a and 4b have the through insertion holes 4a3 and 4b3 for the center bolt b1.

The upper surface 4a1 of the first spacer 4a is curved protruding downward along the lower surface 1b1 of the leaf spring 1b curved protruding downward at the center portion. Specifically, the upper surface 4a1 of the first spacer 4a may have approximately the same curvature as the curvature of the center portion of the lower surface 1b1 of the leaf spring 1b. Note that even in the case where the upper surface 4a1 of the first spacer 4a has a curvature closer to the curvature of the center portion of the lower surface 1b1 of the leaf spring 1b, the first spacer 4a still has stress reduction effect to a certain extent.

The lower surface 4a2 of the first spacer 4a has a flat surface. As illustrated in Fig. 3B, the thickness of the first spacer 4a gradually decreases from the ends toward the center.

Both of the upper surface 4b1 and the lower surface 4b2 of the second spacer 4b are flat.

<Washer 5>

The washer 5 has a flat, approximately plate-like shape elongated in a direction in which the leaf springs 1 extend. The washer 5 is made of, for example, mild steel (steel containing 0.25% or less carbon), spring steel (such as S50C-CSP, SK85-CSP, or SUS301-CSP), or the like.

The upper surface 5u of the washer 5 is curved projecting downward along the lower surface 1a1 of the leaf spring 1a curved projecting downward (see Fig. 2). The lower surface 5s of the washer 5 is flat. The thickness of the washer 5 gradually decreases from the ends toward the center.

With the structure of the spacers 4 and the washer 5 described above, the lowermost leaf spring 1a is sandwiched between the upper surface 5u of the washer 5 curved projecting downward along the lower surface 1a1 of the leaf spring 1a curved projecting downward and the flat lower surface 4a2 of the first spacer 4a, as illustrated in Fig. 2.

When the lowermost leaf spring 1a is fastened and fixed with the center bolt b1 and the U bolt 11b, the lower surface 1a1 of the leaf spring 1a is in contact with the upper surface 5u of the washer 5 having a shape along the lower surface 1a1 of the leaf spring 1a curved projecting downward. On the other hand, the upper surface 1a2 of the leaf spring 1a is in contact with the flat lower surface 4a2 of the first spacer 4a.

This structure reduces tensile stress and compressive stress in the lowermost leaf spring 1a when the lowermost leaf spring 1a is fastened and fixed with the center bolt b1 and the U bolt 11b.

Similarly, when the leaf spring 1b (see Fig. 2) is fastened and fixed with the center bolt b1 and the U bolt 11b, the lower surface 1b1 of the leaf spring 1b is in contact with the upper surface 4a1 (see Fig. 2) of the first spacer 4a having a shape along the lower surface 1b1 of the leaf spring 1b curved projecting downward. On the other hand, the upper surface 1b2 of the leaf spring 1b is in contact with the flat lower surface 4b2 (see Fig. 2) of the second spacer 4b.

This structure reduces tensile stress and compressive stress in the leaf spring 1b when the leaf spring 1b is fastened and fixed with the center bolt b1 and the U bolt 11b.

### <Verification of Stress Reduction Effect of Washer 5 and First Spacer 4a Having Shapes along Lower Surfaces of Leaf Springs 1>

Next, effect of use of the washer 5 and the first spacer 4a described above for reducing stress in the leaf springs 1 will be verified.

Fig. 4A is a diagram illustrating a verification method for stress reduction effect of a comparative example, and Fig. 4B is a diagram illustrating a verification method for stress reduction effect of working examples.

For this verification, a leaf spring It made of spring steel (such as SUP9) and having a thickness of 9 mm, a width of 60 mm, and a length 1155 mm was used as a test sample.

As a comparative example, the leaf spring 1t was sandwiched between plate-shaped spacers 102 each having a flat upper surface 102u and a flat lower surface 102s (see Fig. 4A).

As working examples 1, 2, and 3, three samples were prepared, in each of which a leaf spring 1t, which was a test sample, was sandwiched between a flat spacer 4th and a spacer 4t which had the same shape as that of the first spacer 4a illustrated in Fig. 2 and had an upper surface 4t1 curved projecting downward along the lower surface 1t1 of the leaf spring It, a test sample, curved projecting downward, and a flat lower surface 4t2 (see Fig. 4B).

For the comparative example and the working examples 1, 2, and 3 described above, compression loads in two states-a first state where "the center bolt b1 is fastened" and a second state where "the center bolt b1 is fastened" and "the U bolt 11b is fastened"-were applied (arrows α1 in Figs. 4A and 4B), and stress generated in the leaf spring 1t near the center bolt b1 was evaluated.

**[Table 1]**

| | Stress (Mpa) | | | |
|---|---|---|---|---|
| | When center bolt is fastened | When U bolt is fastened | Increase amount | Average |
| Comparative Example (first time) | 336 | 1161 | 825 | 795 |
| Comparative Example (second time) | 327 | 1092 | 765 | |
| Working Example 1 | 263 | 738 | 475 | 520 |
| Working Example 2 | 293 | 782 | 489 | |
| Working Example 3 | 292 | 887 | 595 | |

Table 1 shows stresses generated in the state where "the center bolt b1 was fastened" (state 1), stresses generated in the state where "the center bolt b1 was fastened" and "the U bolt 11b was fastened" (state 2), increase amounts increased from the stresses generated in the (state 1) to the stresses generated in the (state 2), and increase amounts of the average stresses, for the comparative example and the working examples 1, 2, and 3.

As can been seen from Table 1, in the state where "the center bolt b1 was fastened" (state 1), the stresses generated in the comparative example (at the first time) and (the second time) were 327 to 336 MPa, while stresses generated in the working examples 1, 2, and 3 were 263 to 293 MPa.

Thus, in the state where "the center bolt b1 was fastened" (state 1), stress reductions of about 40 to 60 MPa were observed in the working examples 1, 2, and 3, compared to the comparative example, which was a distinct stress reduction effect.

As can been seen from Table 1, in the state where "the center bolt b1" and "the U bolt 11b were fastened" (state 2), the stresses generated in the comparative example (at the first time) and (the second time) were 1092 to 1161 MPa, while stresses generated in the working examples 1, 2, and 3 were 738 to 887 MPa.

Thus, in the state where "the center bolt b1" and "the U bolt 11b were fastened" (state 2), stress reductions of about 280 to 360 MPa were observed in the working examples 1, 2, and 3, compared to the comparative example, which was a distinct stress reduction effect.

As can been seen from Table 1, the increase amounts increased from the stresses generated in the state where "the center bolt b1 was fastened" (state 1) to the stresses generated in the state where "the center bolt b1 was fastened" and "the U bolt 11b was fastened" (state 2) in the comparative example (at the first time) and (the second time) were 765 to 825 MPa (an average stress increase amount of 795 MPa), while the stresses increase amounts in the working examples 1, 2, and 3 were 475 to 595 MPa (an average stress increase amount of 520 MPa).

Thus, also for the increase amounts increased from the stresses generated in the state where "the center bolt b1 was fastened" (state 1) to the stresses generated in the state where "the center bolt b1 was fastened" and "the U bolt 11b was fastened" (state 2), a reduction in the stress increase amount of about 270 MPa was observed in the working examples 1, 2, and 3, compared to the comparative example.

From the above evaluation, a distinctive advantage of the working examples 1, 2, and 3 (the structures of embodiment 1) in stress reduction over the comparative example was confirmed.

### <Tightening Stress (Generated) in Leaf springs 1 and Their Life>

In the case where the leaf springs 1 that are curved or have curved portions are fixed with the center bolt b1 and the U bolt 11b, and the center portion is deformed to be flat, the larger the deformation is, in other words, the larger the generated stress is, the shorter the life of the leaf springs 1 will be. In contrast, the smaller the deformation of the leaf springs 1 is, in other words, the smaller the generated stress is, the longer the life of the leaf spring 1 will be.

Thus, use of the washer 5 and the first spacer 4a of embodiment 1 increases their lives of the leaf springs because the stresses generated in the leaf springs 1 decrease.

As has been described, below the leaf spring 1b in the suspension apparatus S are arranged the first spacer 4a having the upper surface 4a1 curved projecting downward along the lower surface 1b1 of the leaf spring 1b curved projecting downward, and the washer 5, which are gap retaining members. This reduces deformation of the center portion of the leaf spring 1b, generated when the leaf spring 1b are fastened and fixed with the center bolt b1 and the U bolt 11b, preventing increase in stress in the portion. This, in turn, prevents fatigue fracture of the center portion of the leaf spring, allowing the life of the leaf spring 1b in the suspension apparatus S to be longer.

Therefore, this structure provides the spacers (4a, 4b) and the washer 5 that allows the life of the suspension apparatus S to be longer and the suspension apparatus S including them.

Note that although in the above embodiment 1, description has been provided for the case where the washer 5 having the upper surface 5u curved projecting downward along the lower surface 1a1 of the leaf spring 1a curved projecting downward is provided below the leaf spring 1a in the suspension apparatus S, and the first spacer 4a having the upper surface 4a1 curved projecting downward along the lower surface 1b1 of the leaf spring 1b curved projecting downward is provided, the washer and the spacers may be arranged without being limited to the above structure.

### «Embodiment 2»

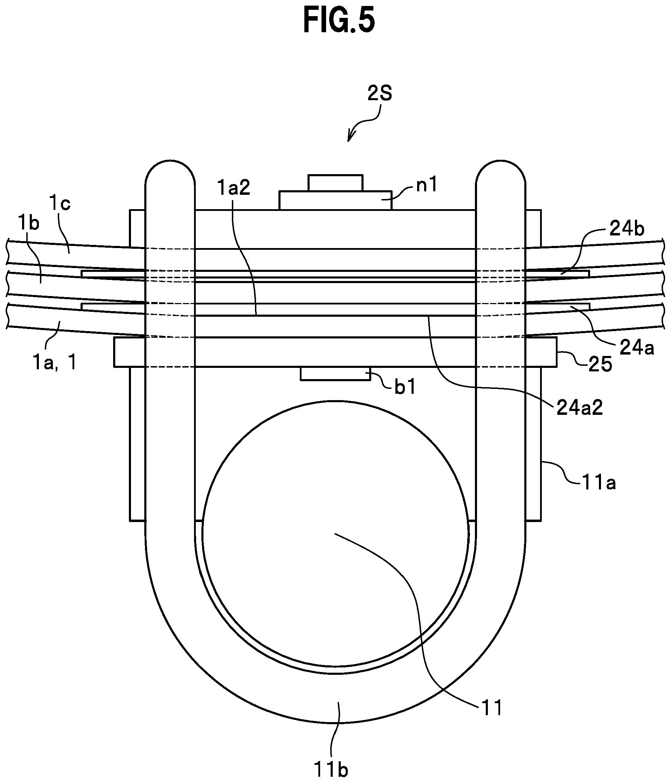

Fig. 5 is an enlarged front view of the center and its vicinities of leaf springs in a suspension apparatus of embodiment 2.

In the suspension apparatus 2S of embodiment 2, a spacer 24a arranged above a leaf spring 1a has a lower surface 24a2 having a shape along the upper surface 1a2 of the leaf spring 1a curved projecting downward.

The other constituents are the same as those in embodiment 1. Thus, the same constituents are denoted by the same reference signs, and detailed description thereof is omitted.

The suspension apparatus 2S of embodiment 2 includes leaf springs 1 (1a, 1b, 1c), first and second spacers 24a and 24b, and a washer 25.

### <First and Second Spacers 24a and 24b>

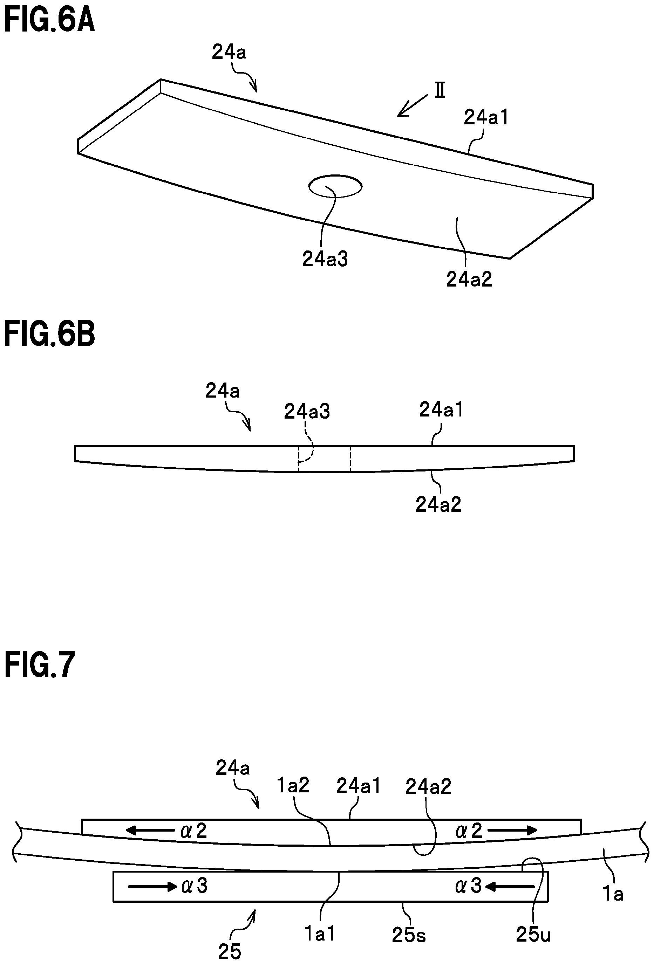

Fig. 6A is a perspective view of the first spacer as seen obliquely from below, and Fig. 6B is a view as seen in the direction of arrow II in Fig. 6A.

The first and second spacers 24a and 24b have flat, approximately plate-like shapes elongated in direction in which the leaf springs 1 extend. The first and second spacers 24a and 24b are made of the same material as those of the first and second spacers 4a and 4b of embodiment 1. The first and second spacers 24a and 24b have the through insertion holes 24a3 and 24b3, respectively, for a center bolt b1.

The lower surface 24a2 of the first spacer 24a illustrated in Fig. 6A is curved projecting downward along the upper surface 1a2 of the leaf spring 1a curved projecting downward (see Fig. 5). The upper surface 24a1 of the first spacer 24a is flat. As illustrated in Fig. 6B, the thickness of the first spacer 24a gradually decreases from the ends toward the center.

The second spacer 24b has an upper surface 24b1 and a lower surface 24b2 both of which are formed to be flat.

### <<Washer 25>>

The washer 25 has a flat, approximately plate-like shape elongated in a direction in which the leaf springs 1 extend. The washer 25 is made of the same material as that of the washer 5 of embodiment 1.

The washer 25 has an upper surface 25u and a lower surface 25s both of which are formed to flat.

Fig. 7 is an enlarged schematic view of the leaf spring 1a of embodiment 2 which is fastened and fixed.

The leaf spring 1a is arranged above the washer 25 having the flat upper surface 25u, and above the leaf spring 1a is arranged the first spacer 24a having the lower surface 24a2 curved protruding downward along the upper surface 1a2 of the leaf spring 1a curved protruding downward. In this state, the leaf spring 1a and other parts are fastened and fixed with the center bolt b1 and a U bolt 11b.

This structure suppresses deformation of the leaf spring 1a fastened and fixed with the center bolt b1 and the U bolt 11b as illustrated in Fig. 7. Accordingly, this, in turns, suppresses or eliminates excessive tensile stress (arrows α2 in Fig. 7) and compressive stress (arrows α3 in Fig. 7) generated in the leaf spring 1a assembled as laminated leaf springs.

This alleviates stress concentration in the leaf spring 1a and suppresses the fatigue fracture, allowing the life of the leaf spring 1a to be longer. Therefore, this structure provides a longer life of the suspension apparatus 2S.

Note that although in embodiment 2, description was provided for the case where the first spacer 24a having the lower surface 24a2 curved projecting downward along the upper surface 1a2 of the leaf spring 1a curved projecting downward is arranged above the leaf spring 1a, the first spacer 24a having the lower surface 24a2 curved projecting downward may be arranged any one of the leaf springs 1.

Alternatively, the first spacer 24a having the lower surface 24a2 curved projecting downward may be arranged for any two of the leaf springs 1. Alternatively, the first spacer 24a having the lower surface 24a2 curved projecting downward may be arranged below each of the leaf springs 1.

Note that since the lowermost leaf spring 1a receives the largest load in the suspension apparatus 2S, using the first spacer 24a for the leaf spring 1a is the most effective.

In addition, although the washer 25 having the upper surface 25u and the lower surface 25s both of which are flat was illustrated, the thickness of the washer 25 may gradually decrease from the ends to the center in the same way as the first spacer 24a does. In this case, the washer 25 is arranged above the leaf springs 1.

### «Modification»

In a modification, a spacer 4a or 4b, or a washer 5 in a suspension apparatus S faces a curved outer surface of an adjacent leaf spring 1 and has a surface with a curvature larger than the curvature of a flat surface and smaller than the curvature of the outer surface.

Alternatively, the spacer 4a or 4b, or the washer 5 in the suspension apparatus S faces an outer surface having a curved portion of an adjacent leaf spring 1 and has a surface with a curvature larger than the curvature of a flat surface and smaller than the curvature of the curved portion.

In the modification, the amount of deformation in the leaf springs 1 is smaller than in the case where the spacer 4a or 4b, or the washer 5 is flat when the leaf springs 1 are fastened and fixed with a center bolt b1 and a U bolt 11b. This alleviates stress concentration in the leaf spring 1 and suppresses the fatigue fracture, improving the reliability of the leaf spring 1.

Therefore, this in turns improves the reliability of the suspension apparatus S and allow the life to be longer.

### <<Other Embodiments>

1. Although in embodiments 1 and 2, and the modification, described above, description was provided for the case where one of the surfaces of the spacers (such as 4a and 4b) has a shape along an adjacent leaf spring 1, both upper and lower surfaces of a spacer may have shapes along the lower surface of the above first leaf spring 1 and the upper surface of the below second leaf spring 1, respectively, and the spacer may be arranged between the first leaf spring 1 and the second leaf spring 1.
2. Similarly, although in embodiments 1 and 2, and the modification, described above, description was provided for the case where the upper surface of the washer (5, 25) or the like has a shape along the adjacent leaf spring 1, both upper and lower surfaces of the washer may have shapes along the above first leaf spring 1 and the below second leaf spring 1, respectively, and the washer may be arranged between the first leaf spring 1 and the second leaf spring 1.
3. Although in embodiments 1 and 2, and the modification, described above, description was provided for the case where the leaf springs 1 are curved downward; also in the case where the leaf springs 1 has an outer surface with a curved surface including concave and convex portions, spacers and a washer may have a surface along the curved surface including the concave and convex portions. This structure has the same effect as in embodiments 1 and 2, and the modification.
4. Although in embodiments 1 and 2, and the modification, described above, description was provided for various structures, some of these structure may be selected and combined as appropriate.
5. Embodiments 1 and 2, and the modification, described above, are for describing examples of the present invention written in the claims, and various modifications and specific forms can be made within the scope written in the claims.

The present invention is understood as follows.

In a first aspect, a spacer plate (4a) is held between a pair of curved leaf springs (1a, 1b). The spacer plate (4a) has opposing plate surfaces (4a1, 4a2). One of the opposing place surfaces is a concave surface (4a1).

The concave surface (4a1) of the spacer plate (4a) is in contact with a convex surface of one leaf spring (1c). The curvature of the concave surface (4a1) of the spacer plate (4a) is equal to or smaller than the curvature of the convex surface of the one leaf spring. In the case where the concave surface (4a1) of the spacer plate (4a) has the same curvature as that of the convex surface of the one leaf spring (1c), these surfaces are in surface contact with each other.

On the other hand, the other of the opposing plate surfaces is a flat surface (4a2). The flat surface (4a2) of the spacer plate (4a) is in line contact with a concave surface (1b2) of the other leaf spring (1b).

In a second aspect, a spacer plate (24a) has opposing plate surfaces (24a1, 24a2). One of the opposing plate surfaces is a convex surface (24a1).

A convex surface (24a2) of the spacer plate (24a) faces a concave surface (24a1) of the one leaf spring (1a). The curvature of the convex surface (24a2) of the spacer plate (24a) is equal to or larger than the curvature of a concave surface (1a2) of the one leaf spring (1a). In the case where the curvature of the convex surface (24a2) of the spacer plate (24a) is equal to the curvature of the concave surface of the one leaf spring (1a), these surfaces are in surface contact with each other.

The other of the opposing plate surfaces is a flat surface (24a1). The flat surface (24a1) of the spacer plate (24a) is in line contact with the convex surface of the other leaf spring (1b).

In a third aspect, one of the opposing plate surfaces of a spacer plate may be a concave surface (4a1), and the other of the opposing plate surfaces may be a convex surface (24a2).

### Reference Signs List

1, 1a, 1b, 1c leaf spring
1a1, 1b1 lower surface (curved outer surface of a leaf spring)
1a2, 1b2 upper surface (curved outer surface of a leaf spring)
4a, 24a first spacer (spacer)
4a1 upper surface (surface along a curved outer surface of a leaf spring, surface along the lower surface of a leaf spring, surface having a portion with the same curvature as that of an outer surface of a leaf spring)
4b, 24b second spacer (second spacer)
5, 25 washer
5u upper surface (surface along a curved outer surface of a leaf spring, surface along the lower surface of a leaf spring, surface having a portion with the same curvature as that of an outer surface of a leaf spring)
24a2 lower surface (surface along the upper surface of a leaf spring)
S, 2S suspension apparatus (laminated leaf springs)

## Claims

1. A gap retaining member provided between leaf springs comprising:
a surface along a curved outer surface of a center portion of an adjacent leaf spring of the leaf springs.

2. The gap retaining member as claimed in Claim 1,
wherein the gap retaining member is adjacent to a lower surface of the leaf spring, and
wherein the gap retaining member has an upper surface having a surface along the lower surface of the leaf spring.

3. The gap retaining member as claimed in Claim 1,
wherein the gap retaining member is adjacent to an upper surface of the leaf spring, and
wherein the gap retaining member has a lower surface having a surface along the upper surface of the leaf spring.

4. The gap retaining member as claimed in Claim 1,
wherein the gap retaining member comprises a first gap retaining member and a second gap retaining member, spring,
wherein the first gap retaining member is adjacent to a lower surface of the leaf
wherein the first gap retaining member has an upper surface having a surface along the lower surface of the leaf spring,
wherein the second gap retaining member is adjacent to an upper surface of the leaf spring, and
wherein the second gap retaining member has a lower surface having a surface along the upper surface of the leaf spring.

5. The gap retaining member as claimed in Claim 1,
wherein the gap retaining member is adjacent to an upper surface of a first leaf spring of the leaf springs,
wherein the gap retaining member has a lower surface having a surface along the upper surface of the first leaf spring,
wherein the gap retaining member is adjacent to a lower surface of a second leaf spring of the leaf springs, and
wherein the gap retaining member has an upper surface having a surface along the lower surface of the second leaf spring.

6. A gap retaining member provided between leaf springs comprising:
a surface having a portion with a curvature equal to a curvature of a center portion of an outer surface of an adjacent leaf spring of the leaf springs or a curvature larger than a flat surface and smaller than the outer surface, and being opposed to the outer surface.

7. A gap retaining member provided between leaf springs comprising:
a surface having a portion away from and opposed to an outer surface of an adjacent leaf spring of the leaf springs.

8. The gap retaining member as claimed in any one of Claims 1 to 7,
wherein the gap retaining member is a spacer or a washer.

9. A laminated leaf spring comprising:
leaf springs; and
a gap retaining member as claimed in any one of Claims 1 to 8 provided between the leaf springs.
